# EUROPEAN PATENT APPLICATION

(11) **EP 2 551 047 A1**
(43) Date of publication of application: **30.01.2013**
(21) Application number: 11382262.1
(22) Date of filing: 29.07.2011
(51) Int. Cl.: B23D 36/00, B65H 20/20

(54) **Sheet cutting line**

(71) Applicant: Fagor, S. Coop., 20500 Arrasate-Mondragon (ES)
(72) Inventor: Piquer Pérez, Jose Manuel, 20305 IRUN (ES); Otegi Iparragirre, Patxi, 20018 DONOSTIA (ES); Terés Arguiñano, Sergio, 20800 ZARAUTZ (ES); Barrasa Artamendi, Ekaitz, 01006 VITORIA-GASTEIZ (ES); Bikandi Bikandi, Mikel, 48200 DURANGO (ES); García Chueca, Daniel, 20018 DONOSTIA (ES)
(74) Representative: Igartua, Ismael

(57) **Abstract**

Sheet cutting line comprising a feeder for providing sheet (5) at a constant feeding speed (V_{f}), a shear device (3) for cutting, in a controlled manner, a sheet (5), segments (50) of sheet of certain lengths being obtained. The shear device (3) comprises a constant cutting rate, the cutting line comprising feeding means (4) disposed in front of the shear device (3) and adapted to supply a required cutting length of the sheet (5) between two successive cutting cycles of the shear device (3) to the shear device (3), without modifying the control on said shear device (3),, when said required cutting length is equal to or different to a standard cutting length corresponding to the combination of a cutting rate of the shear device (3) and a constant speed at which sheet (5) is supplied to the shear device (3).

## Description

### TECHNICAL FIELD

This invention relates to sheet cutting lines, in which a sheet is cut to obtain segments of sheet of a required length.

### PRIOR ART

Sheet cutting lines are currently widely known and used. The purpose of these lines is to obtain segments of sheet of a certain length, from coiled sheet, for subsequent forming treatment for example.

Conventional cutting lines basically comprise a feeder that helps in the supply of a sheet from a main coil, a leveler for smoothing or flattening the sheet coming out of the feeder, a cutting shear for cutting the sheet coming out of the leveler, segments of sheet of a certain length being obtained with a constant line speed, and a system for stacking formats. The shear has a cutting rate that depends on the speed of the line and the required cutting length of the segments to be obtained after cutting, so that said rate is commonly modified in order to obtain segments of different lengths.

Document US5122964A discloses a cutting line that comprises feed rollers in front of the shear, which modify their rotational speed during the supply process. The shear device corresponds to a rotary shear, and during said process the rotational speed of the cutting shear is also modified in order to adjust the line speed and rate required. The speeds of the feed rollers and of the rotary shear are related to each other, which results, for example, in more precise control as it is necessary to maintain the relationship at all times.

### BRIEF DISCLOSURE OF THE INVENTION

It is an object of the invention to provide a sheet cutting line as described in the claims.

The sheet cutting line of the invention comprises a feeder that provides sheet at a constant speed from a coil, a sheet leveler for flattening the sheet coming out of the feeder, and a shear for cutting the sheet coming out of the straightening machine in a controlled manner, at a certain cutting length.

The shear comprises a constant cutting rate, the cutting line comprising feeding means disposed in front of the shear and adapted to supply to the shear a required cutting length of the sheet between two successive cutting steps, when said required cutting length is equal to or different to a standard cutting length corresponding to the combination of a cutting rate of the shear and a constant speed at which sheet is supplied to the shear.

As a result, as the feeding means have the function of providing the shear with the certain length of sheet to be cut, it is not necessary to modify the cutting rate of the shear, which can be kept constant, or to carry out changes in the control effected on it in order to make the line more productive, and said shear does not require a complex control, with a conventional shear/control unit that has already been tested and standardised being capable of being used, for example.

These and other advantages and characteristics of the invention will be made evident in the light of the drawings and the detailed description thereof.

### DESCRIPTION OF THE DRAWINGS

Figure 1 shows a schematic view of a first embodiment of the sheet cutting line of the invention.
Figure 2 shows the cutting line of Figure 1, where feeding means are shown.
Figure 3 shows the development of the rotational speed of rollers of the cutting line of Figure 1 during a supply period, for the case in which the required cutting length coincides with a standard length.
Figure 4 shows the development of the rotational speed of rollers of the cutting line of Figure 1 during a supply period, for the case in which the required cutting length is greater than the standard length.
Figure 5 shows the development of the rotational speed of rollers of the cutting line of Figure 1 during a supply period, for the case in which the required cutting length is smaller than the standard length.

### DETAILED DISCLOSURE OF THE INVENTION

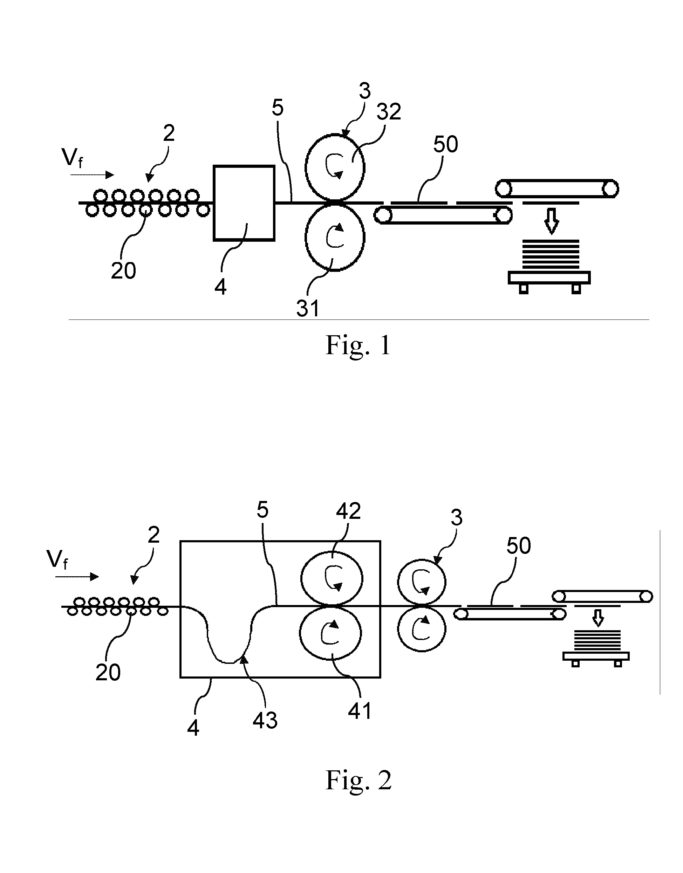

Figure 1 shows a first embodiment of the sheet cutting line of the invention. The cutting line comprises a feeder (not shown in the figures) to provide sheet 5 at a constant feeding speed V_{f}, a leveler 2 for flattening the sheet 5 coming out of the feeder, and a shear 3 for cutting the sheet 5 coming out of the leveler 2 in a controlled manner, segments 50 of sheet cut at a certain length being obtained, said length corresponding to a cutting length of the shear 3. The sheet 5 is stored in the manner of a coil in the feeder, and the feeder rotates at a certain speed, uncoiling said coil and providing the sheet 5 to the leveler 2.

The leveler 2 can comprise two sets of facing rollers 20 such as the ones shown in Figures 1 and 2 by way of example, although it can also comprise other types of conventional elements. The sheet 5 coming out of the feeder passes between the two sets of rollers, which smoothen or flatten it, at least to a greater extent, by at least some of the rollers 20 of said sets.

The shear 3 comprises a constant cutting rate, which means that the time that elapses between two successive cutting steps in which the shear 3 performs a cut on the sheet 5 is constant. As a result, taking into account the cutting rate and a constant speed at which sheet 5 is supplied to the shear 3, which can coincide with the feeding speed V_{f} of the feeder or not, the shear 3 cuts the sheet 5 so that segments 50 of sheet of a certain length, which is known as a standard length throughout the document, are obtained.

The cutting line comprises feeding means 4 disposed in front of the shear 3, which are adapted to supply the shear 3 with a required cutting length of the sheet 5 between two successive cutting cycles when said required cutting length is equal to or different to the standard length. The feeding means 4 are thus adapted to compensate for the difference in length between the required cutting length and the standard length both when the required cutting length is greater than the standard length and when it is smaller, so that the shear 3 can cut the sheet 5 in segments 50 of different lengths. As the supply means 4 have the function of providing the shear 3 with the certain length of sheet 5 to be cut, it is not necessary to modify the control on the shear 3 in order to modify the cutting length, as a result of which said shear 3 does not require a complex control and a conventional shear/control unit that has already been tested and standardised can be used, for example, which ensures reliable and effective cutting.

In the first embodiment the supply means 4 comprise at least two facing rollers 41 and 42 between which the sheet 5 is supplied to the shear 3, and an actuator (not shown in the figures) to provide a rotation to the rollers 41 and 42 in accordance with the cutting length and separate from the control of the shear 3 at all times. With their rotation the rollers 41 and 42 pull or push the sheet 5 towards the shear 3, as a result of which at different rotational speeds said rollers 41 and 42 can provide different lengths of sheet to the shear 3 between two successive cutting steps of said shear 3. The feeding means 4 thus enable at least two different working modes: the first, at a constant rotational speed of the rollers 41 and 42, when the cutting rate of the shear 3 coincides with the required cutting length at a constant rotational speed of the rollers 41 and 42, and the second when said rate does not coincide with the required cutting length at a constant rotational speed of the rollers 41 and 42 and, therefore, the rotational speed of the rollers 41 and 42 is variable in order to supply the required cutting length. The actuator can comprise a motor with its corresponding control, such as a numerical control, for example.

In the first embodiment the supply means 4 also comprise an accumulation area 43 disposed in front of the rollers 41 and 42, which is adapted to house a stock of sheet 5. As a result, the rollers 41 and 42 pull the sheet 5 accumulated in the accumulation area 43 at a different speed to that of the supply of the rest of the line and prevent possible stretched sections in the sheet 5, and the deformation or formation of folds in the sheet 5 due to said rollers 41 and 42.

In the first embodiment the shear 3 corresponds to a rotary shear such as the one shown in Figures 1 and 2, by way of example, with two facing rollers 31 and 32 that rotate at the same rotational speed Vₛ, the constant cutting rate implying a constant rotational speed of the rotary shear. As a result, as well as not requiring a complex control, as explained above, nor is a change in the rotary shear (with a greater or smaller radius) required to cut different lengths of sheet, with the rotational speed of the rotating shear device being kept constant, and a larger range of lengths can be cut as there is no problem of inertia due to the radius of the rotary shear. As a result, the cutting line of the invention is more flexible than those known in the prior art, given that in a simpler manner and with the same rotary shear segments 50 with a greater range of lengths can be obtained. The rotary shears are known in the prior art, as a result of which the manner in which they operate is not detailed here.

The actuator 40 is adapted to cause a rotational speed V_{R} of the rollers 41 and 42 substantially equal to the rotational speed Vₛ of the rotating shear at the moment at which the rotary shear cuts the sheet 5, regardless of the required cutting length, thereby always ensuring the correct cutting of the sheet 5 by the rotary shear.

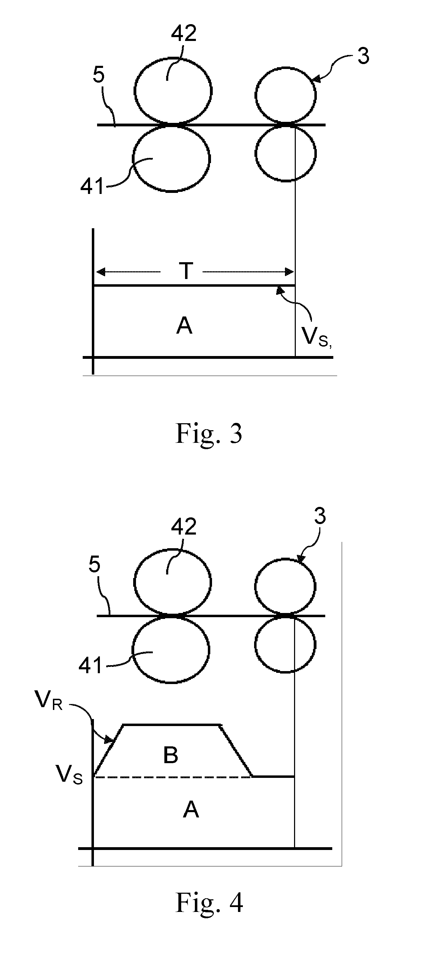

Figures 3 to 5 show three examples of the evolution of the rotational speed V_{R} of the rollers 41 and 42 in the first embodiment of the cutting line, between a period of supply T that elapses between two successive cutting steps of the rotary shear.

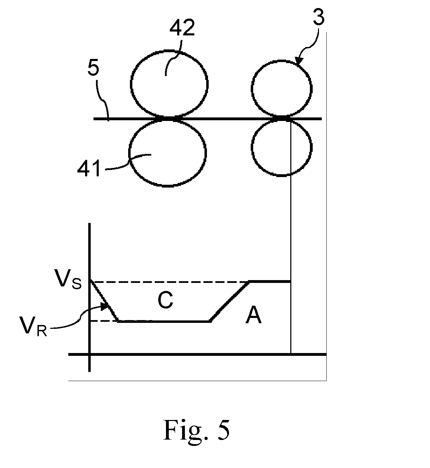

The example of Figure 3 corresponds to the case in which the required cutting length coincides with the standard length, as a result of which the rotational speed V_{R} of the rollers 41 and 42 and the rotational speed Vₛ of the rotary shear are substantially equal throughout the period of supply T, and between two successive cutting steps of the rotary shear the standard length of sheet 5 that is represented as an area A is supplied, segments 50 with a length equal to the standard length being obtained following the corresponding cuts. The examples of Figures 4 and 5 correspond to cases in which the required cutting length and the standard length do not coincide.

Figure 4 shows the evolution of the rotational speed V_{R} of the rollers 41 and 42 in the case in which the required cutting length is greater than the standard length. In this case the rotational speed V_{R} of the rollers 41 and 42 and the rotational speed Vₛ of the rotary shear are not equal throughout the entire period of supply T, the rotational speed V_{R} of the rollers 41 and 42 being higher than the rotational speed Vₛ of the rotary shear during at least part of the period of supply T, so that between two successive cutting steps of the rotary shear the length of sheet 5 provided is greater than the standard length. If the rotational speed V_{R} of the rollers 41 and 42 were equal to the rotational speed Vₛ of the rotary shear, the cutting length would be equal to the standard length, and would correspond to the length represented by the area A. As it requires a greater cutting length, the rotational speed V_{R} of the rollers 41 and 42 is increased an area B being added to the area A, which corresponds to the additional length that must be added to the standard length to obtain the required cutting length. As can be seen in Figure 4, the rotational speed V_{R} of the rollers 41 and 42 is substantially equal to the rotational speed Vₛ of the rotary shear at the moment at which the rotary shear cuts the sheet 5.

Figure 5 shows the evolution of the rotational speed V_{R} of the rollers 41 and 42 in the case in which the required cutting length is smaller than the standard length. In this case the rotational speed V_{R} of the rollers 41 and 42 and the rotational speed Vₛ of the rotary shear are not equal throughout the entire period of supply T, the rotational speed V_{R} of the rollers 41 and 42 being lower than the rotational speed Vₛ of the rotary shear during at least part of the period of supply T, so that between two successive cutting steps of the rotary shear the length of sheet 5 provided is smaller than the standard length. If the rotational speed V_{R} of the rollers 41 and 42 were equal to the rotational speed Vₛ of the rotary shear, the cutting length would be equal to the standard length, and would correspond to the length represented by the area A. As a smaller cutting length is required, the rotational speed Vₛ of the rollers 41 and 42 is reduced, an area C being subtracted from the area A, which corresponds to the length that has to be subtracted from the standard length to obtain the required cutting length. As shown in Figure 5, the rotational speed V_{R} of the rollers 41 and 42 is substantially equal to the rotational speed Vₛ of the rotary shear at the moment at which the rotary shear cuts the sheet 5. In spite of the differences between the rotational speed Vₛ and Vₛ keeps the line speed constant thanks to the accumulation area 43.

## Claims

1. Sheet cutting line comprising
a feeder for providing a sheet (5) at a constant feeding speed (V_{f}),
a shear (3) for cutting a sheet (5) in a controlled manner a, segments (50) of sheet of certain lengths being obtained,
**characterised in that**
the shear (3) comprises a constant cutting rate, the cutting line comprising feeding means (4) disposed in front of the shear (3) and adapted to supply a required cutting length of the sheet (5) between two successive cutting steps of the shear (3) to the shear (3), without modifying the control on said shear (3),, when said required cutting length is equal to or different to a standard cutting length corresponding to the combination of a cutting rate of the shear (3) and a constant speed at which sheet (5) is supplied to the shear (3).

2. Line according to claim 1, wherein the feeding means (4) comprise two facing rollers (41, 42) between which the sheet (5) is supplied to the shear (3), and at least one actuator (40) to adjust and control the rotational speed of the rollers (41, 42) in accordance with the required cutting length and regardless of the control of the shear (3).

3. Line according to claim 2, wherein the feeding means (4) comprise an accumulation area (43) disposed in front of the rollers (41, 42), where sheet (5) is accumulated.

4. Line according to either of claims 2 or 3, wherein the shear (3) is a rotary shear device.

5. Line according to claim 4, wherein the rotational speed (Vₛ) of the rotating shear device is constant during the cutting, regardless of the required cutting length.

6. Line according to any of claims 2 to 5, wherein the actuator (40) is adapted to cause a rotational speed (V_{R}) of the rollers (41, 42) substantially equal to the rotational speed (Vₛ) of the rotating shear device at the moment at which the rotating shear device cuts the sheet (5).
